# EUROPEAN PATENT APPLICATION

(11) **EP 4 550 435 A2**
(43) Date of publication of application: **07.05.2025**
(21) Application number: 24208199.0
(22) Date of filing: 22.10.2024
(51) Int. Cl.: H01M 4/04, H01M 4/13, H01M 4/62, H01M 4/66, H01M 4/74, H01M 4/75, H01M 4/80, H01M 10/052, H01M 4/02

(54) **ELECTRODE AND LITHIUM BATTERY CONTAINING THE ELECTRODE**

(30) Priority: 27.10.2023 KR 20230145275
(71) Applicant: Samsung SDI Co., Ltd., Gyeonggi-do 17084 (KR)
(72) Inventor: SHIN, Donghyun, 17084 Yongin-si (KR); KIM, Jaehong, 17084 Yongin-si (KR); KWON, Hyejin, 17084 Yongin-si (KR); CHA, Jungwook, 17084 Yongin-si (KR)
(74) Representative: Marks & Clerk LLP

(57) **Abstract**

An electrode and a lithium battery including the same are provided. The electrode includes an electrode active material layer and two or more electrode current collectors arranged along a thickness direction within the electrode active material layer, wherein the two or more electrode current collectors include an upper electrode current collector adjacent a top surface of the electrode active material layer; and a lower electrode current collector adjacent a bottom surface of the electrode active material layer, wherein the electrode active material layer includes an internal electrode active material layer between the upper electrode current collector and the lower electrode current collector; and an external electrode active material layer outside of the upper electrode current collector and the lower electrode current collector, and wherein the two or more electrode current collectors include a porous structure.

## Description

### BACKGROUND

### 1. Field

Embodiments of the present disclosure relate to an electrode and a lithium battery including the same.

### 2. Description of the Related Art

In order to meet miniaturization and relatively high performance characteristics of various devices, relatively high energy density is important in addition to decreased size and weight reduction of lithium batteries. In this regard, relatively high-capacity lithium batteries are important.

An electrode manufactured from a slurry including a solvent (e.g., an organic solvent) may utilize an excessive amount of the solvent during the manufacturing of the electrode. Therefore, a dry method that does not include (e.g., excludes) the utilization of such solvent (e.g., an organic solvent) is being studied or pursued.

### SUMMARY

Aspects of one or more embodiments of the present disclosure relate to a dry electrode including two or more electrode current collectors that include (e.g., contain) a porous structure.

Aspects of one or more embodiments of the present disclosure relate to a lithium battery including the above-described electrode.

Additional aspects will be set forth in part in the description which follows and, in part, will be apparent from the description, or may be learned by practice of the presented embodiments of the present disclosure.

According to one or more embodiments of the present disclosure, an electrode includes an electrode active material layer, and two or more electrode current collectors arranged along a thickness direction within the electrode active material layer, wherein a region of the two or more electrode current collectors overlapping the electrode active material layer in the thickness direction includes (e.g., contains) a porous structure.

According to one or more embodiments of the present disclosure, an electrode includes an electrode active material layer, and two or more electrode current collectors arranged along a thickness direction within the electrode active material layer, wherein the two or more electrode current collectors include an upper electrode current collector adjacent a top surface of the electrode active material layer; and a lower electrode current collector adjacent a bottom surface of the electrode active material layer, wherein the electrode active material layer includes an internal electrode active material layer between the upper electrode current collector and the lower electrode current collector; and an external electrode active material layer outside of the upper electrode current collector and the lower electrode current collector, and wherein the two or more electrode current collectors include a porous structure.

According to one or more embodiments of the present disclosure, a lithium battery includes a first electrode (*e*.*g*. a positive electrode), a second electrode (*e*.*g*. a negative electrode), and an electrolyte arranged between the first electrode and the second electrode, wherein the first electrode, the second electrode, and/or any suitable combination thereof may be (*e*.*g*., may each be) the above-described electrode.

### BRIEF DESCRIPTION OF DRAWINGS

The above and other aspects, features, and/or principles of certain embodiments of the present disclosure will be more apparent from the following description taken in conjunction with the accompanying drawings, in which:
FIG. 1 is a schematic cross-sectional view showing a stacked state of an electrode according to one or more embodiments of the present disclosure;
FIG. 2 is a cross-sectional schematic view showing a stacked state of an electrode according to one or more embodiments of the present disclosure;
FIG. 3 is a cross-sectional schematic view showing a stacked state of an electrode according to comparative embodiments;
FIG. 4 is a scanning electron microscope image of a cross-section of a dry electrode film including a fibrillized dry binder;
FIG. 5 is a schematic perspective view showing a method of manufacturing the dry electrode film according to one or more embodiments of the present disclosure;
FIG. 6 is a schematic exploded perspective view of a lithium battery according to one or more embodiments of the present disclosure;
FIG. 7 is a schematic exploded perspective view of the lithium battery according to one or more embodiments of the present disclosure; and
FIG. 8 is a schematic exploded perspective view of a lithium battery according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, one or more embodiments are merely described in more detail, by referring to the drawings, to explain aspects of the present description. These embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

Various embodiments are illustrated in the attached drawings. However, the present disclosure may be implemented in various other ways and should not be interpreted as limited to one or more embodiments set forth herein.

Although the terms "first," "second," "third," and/or the like may be utilized herein to describe various elements, ingredients, regions, layers, and/or sections, these elements, ingredients, regions, layers, and/or sections should not be limited by these terms. These terms are utilized only to distinguish one element, ingredient, region, layer, or section from another element, ingredient, region, layer, or section. Therefore, a first element, ingredient, region, layer, or section described below may be referred to as a second element, ingredient, region, layer, or section without departing from the scope of the present disclosure.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. "At least one" should not be interpreted as limited to the singular.

.It will be further understood that the terms "comprises," "comprising," "includes," "including," "have," "having," "contain," and "containing," when used in this specification, specify the presence of the stated features, regions, integers, steps, operations, elements, ingredients, and/or components, but do not preclude the presence or addition of one or more other features, regions, integers, steps, operations, elements, ingredients, components, and/or groups thereof.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (*e*.*g*., rotated 90 degrees or at other orientations) and the spatially relative descriptors used herein should be interpreted accordingly.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having meanings consistent with their meanings within the context of the relevant art and/or the present disclosure, and should not be interpreted in an idealized or overly formal sense, unless expressly so defined herein.

One or more embodiments are described herein with reference to cross-sectional views, which are schematic views of implementation examples. As described above, modifications from the illustrated shape may occur, for example, as a result of manufacturing techniques and/or tolerances. Therefore, the embodiments described herein should not be construed as limited to the specific shapes of the regions as illustrated herein, but should include variations in shapes resulted from, for example, manufacturing. For example, regions illustrated or described as flat may typically have rough and/or non-linear features. Furthermore, sharply illustrated angles may be round. Therefore, the regions illustrated in the drawings are schematic in nature and the shapes are not intended to depict the exact shape of the regions and are not intended to limit the scope of the claims.

In the drawings, the thicknesses of layers and regions may be exaggerated or shrunk for clarity of description. Throughout the specification, if a component, such as a layer, film, region, or plate, is described as being "above," "on," "connected to," or "coupled to" another component, the component may be directly above, on, connected to or coupled to the other component, or one or more intervening components may be present. In addition, it will also be understood that when a component is referred to as being "between" two components, it can be the only component between the two components, or one or more intervening components may also be present.

As used herein, the term "dry electrode" or "dry electrode film" may refer to an electrode or an electrode film that includes no solvent or does not intentionally use a solvent in an electrode manufacturing process. The solvent may include a processing solvent, a processing solvent residue, a processing solvent impurity, and/or the like

As used herein, a "particle diameter" of a particle represents an average diameter if the particle is spherical, and represents an average major axis length if the particle is non-spherical. The particle diameter may be measured utilizing a particle size analyzer (PSA). The "particle diameter" may be, for example, the average particle diameter. An "average particle diameter" may be, for example, D50, which is a median particle diameter, which refers to the average diameter (or size) of particles whose cumulative volume corresponds to 50 vol% in the particle size distribution (*e*.*g*., cumulative distribution), and refers to the value of the particle size corresponding to 50% from the smallest particle when the total number of particles is 100% in the distribution curve accumulated in the order of the smallest particle size to the largest particle size. The "aspect ratio" used herein may refer to the average aspect ratio and may be determined from SEM images.

In present disclosure, "not including a or any 'component‴ "excluding a or any 'component‴, ‴component'-free", and/or the like refers to the "component" not being added, selected or utilized as a component in the composition/structure, but the "component" of less than a suitable amount may still be included due to other impurities and/or external factors.

As used herein, an "electrode active material" refers to an electrode material capable of undergoing lithiation and delithiation.

As used herein, a "positive electrode active material" refers to a positive electrode material capable of undergoing lithiation and delithiation.

As used herein, a "negative electrode active material" refers to a negative electrode material capable of undergoing lithiation and delithiation.

As used herein, the terms "lithiation" and "to lithiate" refer to a process of adding lithium to an electrode active material.

As used herein, the terms "delithiation" and "to delithiate" refer to a process of releasing lithium from an electrode active material.

As used herein, "charging" and "charge" refer to a process of providing electrochemical energy to a battery.

As used herein, "discharging" and "discharge" refer to a process of removing electrochemical energy from a battery.

As used herein, a "positive electrode" and a "cathode" refer to an electrode where electrochemical reduction and lithiation occur during a discharging process.

As used herein, a "negative electrode" and an "anode" refer to an electrode where electrochemical oxidation and delithiation occur during a discharging process.

As used herein, the terms "fibrillized" and "fibrillize" refer to a process of converting (e.g., by grinding or pulverizing) particulates of a substance into fibrous shape (*i.e.*, fibrils) of said substance that has a higher aspect ratio than the particulates.

Although specific embodiments are described, applicants or those skilled in the art may perceive alternatives, modifications, variations, improvements, and substantial equivalents, which may not be currently contemplated or foreseen. Therefore, the appended claims that may be filed and modified, are intended to cover all such alternatives, modifications, variations, improvements, and substantial equivalents.

Hereinafter, an electrode according to one or more embodiments, and a lithium battery including the same will be described in more detail.

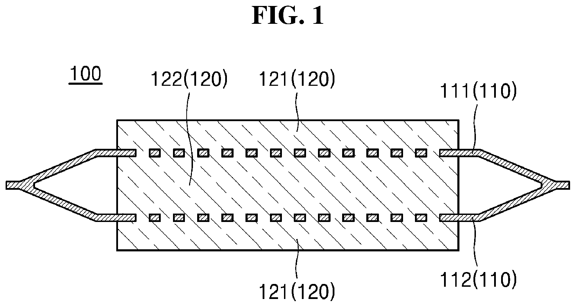

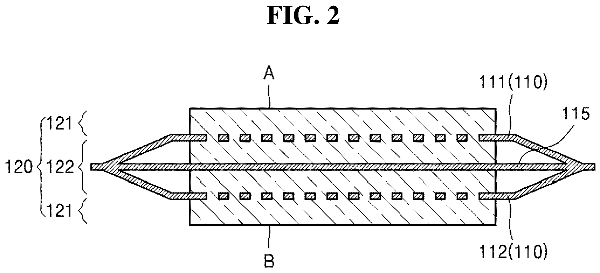

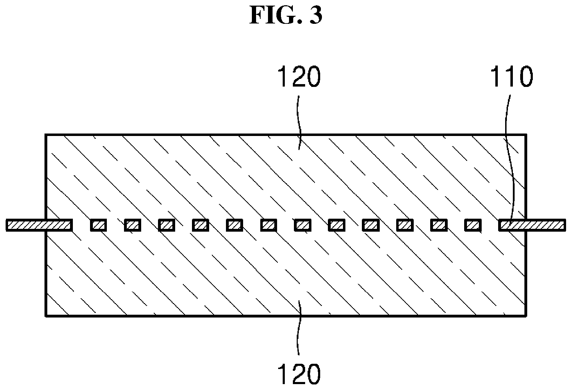

FIG. 1 is a schematic cross-sectional view showing a stacked state of electrodes according to one or more embodiments of the present disclosure. FIG. 2 is a schematic cross-sectional view showing a stacked state of electrodes according to one or more embodiments of the present disclosure. FIG. 3 is a schematic cross-sectional view showing a stacked state of electrodes according to comparative embodiments.

Referring to FIG. 1 to FIG. 3, the electrode 100 according to one or more embodiments includes: an electrode active material layer 120; and two or more electrode current collectors 110 arranged with each other (*e*.*g*., an upper electrode current collector 111 is arranged with a lower electrode current collector 112) within the electrode active material layer 120 along a thickness direction (*e*.*g*., normal to a plan view of the electrode 100), wherein the two or more electrode current collectors 110 include the upper electrode current collector 111, which is adjacent to a top surface A of the electrode active material layer 120, and the lower electrode current collector 112, which is adjacent to a bottom surface B of the electrode active material layer 120, the electrode active material layer 120 includes an internal electrode active material layer 122 arranged between the upper electrode current collector 111 and the lower electrode current collector 112, and an external electrode active material layer 121 arranged outside of the upper electrode current collector 111 and the lower electrode current collector 112, and a region among the electrode current collectors 110, which overlaps (*e*.*g*., is continuous with or part of) the electrode active material layer 120 in the thickness direction, and includes a porous structure.

Referring to FIG. 3, an electrode of the related art includes only one electrode current collector, and thus electrons may easily move from the electrode active material that is adjacent to the electrode current collector among the electrode active material contained in the electrode active material layer, to the electrode current collector, but electrons may not be easy to move from the electrode active material that is far away from the electrode current collector to electrode current collector. Therefore, there are limitations in that internal resistance of the electrode may increase. In embodiments of the present disclosure, referring to FIGs. 1 and 2, the electrode 100 includes two or more electrode current collectors 110 containing a porous structure inside the electrode active material layer 120, which may lead the electrode active material to be adjacent to another electrode current collector 110 even if (*e*.*g*., when) it is far away from any one electrode current collector 110, and thus a distance between the electrode active material and the electrode current collector 110 (hereinafter, when referring to "the electrode current collector 110" it refers to any one or at least one of the electrode current collectors 110) may decrease. Therefore, a traveling distance of an electron from the electrode active material to the electrode current collector 110 decreases during the charging and discharging of the lithium battery including the electrode 100, and thus internal resistance of the electrode 100 may decrease. Therefore, the lithium battery including the electrode 100 may have decreased internal resistance, and thus overvoltage and internal temperature rise of the battery during the rapid charging may be suppressed or reduced.

For example, the external electrode active material layer 121 may include a first external active material layer arranged on a top surface of the upper electrode current collector 111 and a second external active material layer arranged on a bottom surface of the lower electrode current collector 112.

According to one or more embodiments, a thickness of the internal electrode active material layer 122 may be greater than a thickness of the external electrode active material layer 121. For example, the thickness of the internal electrode active material layer 122 may be greater than the thicknesses of the first external electrode active material and/or the second external electrode active material layer.

According to one or more embodiments, the internal electrode active material layer 122 may have a thickness of about 10 micrometer (µm) to about 190 µm, the external electrode active material layer 121 may have a thickness of about 10 µm to about 190 µm, and the electrode active material layer 120 may have the total thickness of about 20 µm to about 380 µm. For example, the internal electrode active material layer 122 may have a thickness of about 50 µm to about 150 µm, the external electrode active material layer 121 may have a thickness of about 20 µm to about 100 µm, and the electrode active material layer 120 may have the total thickness of about 100 µm to about 300 µm.

For example, the first external electrode active material layer and the second external electrode active material layer may each have a thickness of about 10 µm to about 190 µm. For example, the first external electrode active material layer and the second external electrode active material layer may each have a thickness of about 20 µm to about 100 µm. For example, the thickness of the electrode active material layer 120 may refer to the total sum of the thicknesses of the first external electrode active material layer, the second external electrode active material layer, and the internal electrode active material layer 122.

According to one or more embodiments, the electrode active material layer 120 may be a dry electrode film, wherein the dry electrode film may be a self-standing film, and may be free of any residual processing solvent.

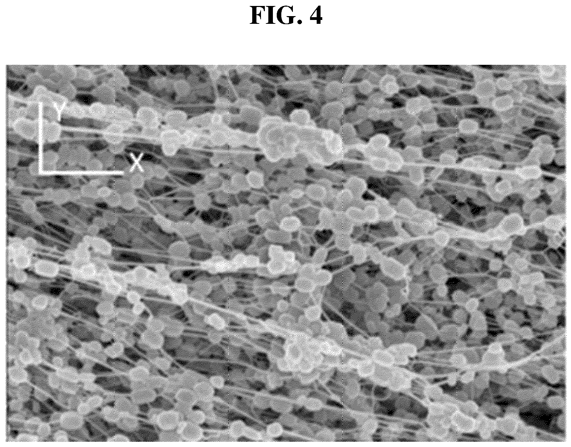

FIG. 4 is a scanning electron microscope (SEM) image of a cross-section of a dry electrode film according to one or more embodiments of the present disclosure. Referring to FIG. 4, the electrode active material layer 120 may include a dry binder fibrillized in the first direction. The first direction may be, for example, an X-axis direction in FIG. 4 (*e*.*g*., a direction parallel to a plan view of the electrode 100). For example, the first direction may be a machine direction (MD), as described in more detail below.

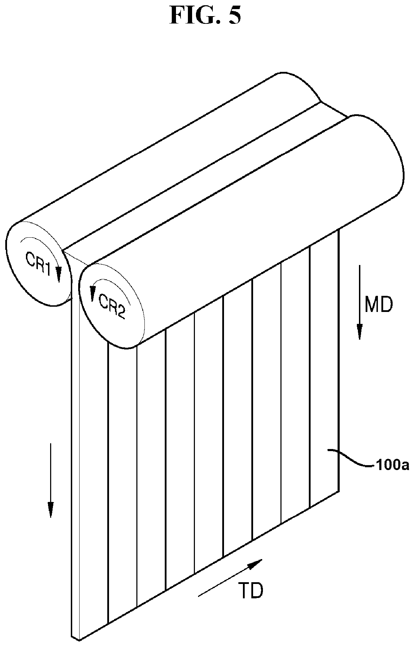

FIG. 5 is a schematic perspective view showing a method of manufacturing a dry electrode film according to one or more embodiments of the present disclosure.

Referring to FIG. 5, a dry electrode film composition is processed into a dry electrode film by passing between a pair of calender rolls. A direction in which the dry electrode film moves while being formed is a machine direction MD of the dry electrode film. The first dry electrode active material composition may be stretched along the machine direction while passing a pair of calender rolls and thus the first dry electrode active material layer 100a may include a first dry binder which is fibrillized in the machine direction. A width direction TD of the first dry electrode active material layer 100a may be a direction crossing the machine direction MD of the first dry electrode active material layer 100a.

According to one or more embodiments, the dry electrode film may include a dry electrode active material and a dry binder.

According to one or more embodiments, the dry electrode active material may include a positive electrode active material. According to one or more embodiments, the dry electrode active material may include a negative electrode active material.

For example, if the dry electrode film is a positive electrode film, the dry electrode active material may include a positive electrode active material.

For example, the positive electrode active material may be a lithium metal oxide, and any suitable material generally available and/or generally utilized in the art may be utilized without limitation.

For example, one or more types (kinds) of composite oxides of lithium and a metal including (*e*.*g*., selected from among) cobalt, manganese, nickel, and/or any suitable combination thereof may be utilized as the positive electrode active material, and an example thereof may be a compound represented by any one or more of: LiₐA_{1-b}B'_{b}D₂ (where 0.90 ≤ a ≤ 1, and 0 ≤ b ≤ 0.5); LiₐE_{1-b}B'_{b}O_{2-c}D_{c} (where 0.90 ≤ a ≤ 1, 0 ≤ b ≤ 0.5, and 0 ≤ c ≤ 0.05); LiE_{2-b}B'_{b}O_{4-c}D_{c} (where 0 ≤ b ≤ 0.5, and 0 ≤ c ≤ 0.05); LiₐNi_{1-b-c}Co_{b}B'_{c}D_{α} (where 0.90 ≤ a ≤ 1, 0 ≤ b ≤ 0.5, 0 ≤ c ≤ 0.05, and 0 < α ≤ 2); LiₐNi_{1-b-c}Co_{b}B'_{c}O₂₋ₐF'_{α} (where 0.90 ≤ a ≤ 1, 0 ≤ b ≤ 0.5, 0 ≤ c ≤ 0.05, and 0 < α < 2); LiₐNi_{1-b-c}Co_{b}B'_{c}O_{2-α}F'₂ (where 0.90 ≤ a ≤ 1, 0 ≤ b ≤ 0.5, 0 ≤ c ≤ 0.05, and 0 < α < 2); LiₐNi_{1-b-c}Mn_{b}B'_{c}D_{α} (where 0.90 ≤ a ≤ 1, 0 ≤ b ≤ 0.5, 0 ≤ c ≤ 0.05, and 0 < α ≤ 2); LiₐNi_{1-b-c}Mn_{b}B'_{c}O₂₋ₐF'ₐ (where 0.90 ≤ a ≤ 1, 0 ≤ b ≤ 0.5, and 0 ≤ c ≤ 0.05, 0 < α < 2); LiₐNi_{1-b-c}Mn_{b}B'_{c}O_{2-α}F'₂ (where 0.90 ≤ a ≤ 1, 0 ≤ b ≤ 0.5, 0 ≤ c ≤ 0.05, and 0 < α < 2); LiₐNi_{b}E_{c}G_{d}O₂ (where 0.90 ≤ a ≤ 1, 0 ≤ b ≤ 0.9, 0 ≤ c ≤ 0.5, and 0.001 ≤ d ≤ 0.1); LiₐNi_{b}Co_{c}Mn_{d}GₑO₂ (wherein 0.90 ≤ a ≤ 1, 0 ≤ b ≤ 0.9, 0 ≤ c ≤ 0.5, 0 ≤ d ≤0.5, and 0.001 ≤ e ≤ 0.1); LiₐNiG_{b}O₂ (wherein 0.90 ≤ a ≤ 1 and 0.001 ≤ b ≤ 0.1); LiₐCoG_{b}O₂ (wherein 0.90 ≤ a ≤ 1 and 0.001 ≤ b ≤ 0.1); LiₐMnG_{b}O₂ (wherein 0.90 ≤ a ≤ 1 and 0.001 ≤ b ≤ 0.1); LiₐMn₂G_{b}O₄ (wherein 0.90 ≤ a ≤ 1 and 0.001 ≤ b ≤ 0.1); QO₂; QS₂; LiQS₂; V₂O₅; LiV₂O₅; Lil'O₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the Formulae representing these compounds, A is Ni, Co, Mn, and/or any suitable combination thereof; B' is Al, Ni, Co, Mn, Cr, Fe, Mg, Sr, V, a rare earth element, and/or any suitable combination thereof; D is O, F, S, P, and/or any suitable combination thereof; E is Co, Mn, and/or any suitable combination thereof; F' is F, S, P, and/or any suitable combination thereof; G is Al, Cr, Mn, Fe, Mg, La, Ce, Sr, V, and/or any suitable combination thereof; Q is Ti, Mo, Mn, and/or any suitable combination thereof; I is Cr, V, Fe, Sc, Y, and/or any suitable combination thereof; and J is V, Cr, Mn, Co, Ni, Cu, and/or any suitable combination thereof.

A compound in which a coating layer is added to the surface of the above-described compound may be utilized, and/or any suitable mixture of the above-described compound and the compound added with a coating layer may also be utilized. The coating layer added to the surface of the above-described compound may include, for example, a coating element compound such as an oxide or hydroxide of a coating element, an oxyhydroxide of a coating element, an oxycarbonate of a coating element, or a hydroxycarbonate of a coating element. A compound constituting the coating layer may be amorphous or crystalline. A coating element included in the coating layer may be Mg, Al, Co, K, Na, Ca, Si, Ti, V, Sn, Ge, Ga, B, As, Zr, and/or any suitable mixture thereof. A method for forming (or providing) the coating layer may be selected within a range that does not adversely affect the physical properties of the positive electrode active material. The coating method may be, for example, a spray coating method, a dipping method, and/or the like. A detailed description of the coating method will not be provided because it may be generally understood by those skilled in the art.

The positive electrode active material may be, for example, a composite positive electrode active material.

The composite positive electrode active material may include for example: a core including a lithium transition metal oxide; and a shell arranged along a surface of the core, wherein the shell includes: one or more first metal oxides represented by Formula MₐO_{b} (where 0<a≤3 and 0<b<4, and if a is 1, 2, or 3, b is not an integer), and graphene, wherein the first metal oxide is arranged in a graphene matrix, and M above is one or more metals from (*e*.*g*., selected from among) Groups 2 to 13, 15, and/or 16 of the Periodic Table of Elements, and the lithium transition metal oxide contains nickel, wherein an amount of nickel is 80 mol% or greater with respect to the total number of moles of the transition metal. The shell including the first metal oxide and graphene is arranged on the core of the composite positive electrode active material.

Due to agglomeration, it may be difficult to uniformly (substantially uniformly) apply graphene on the core. For example, the composite positive electrode active material may utilize a composite including a plurality of first metal oxides arranged in the graphene matrix, thereby allowing the shell to be uniformly (substantially uniformly) arranged on the core while preventing or reducing the agglomeration of graphene. Therefore, by effectively blocking the contact between the core and an electrolyte solution, a side reaction caused by the contact between the core and the electrolyte may be prevented or reduced. In one or more embodiments, the reduction of nickel ions (Ni³⁺->Ni²⁺) and cation mixing caused by the electrolyte solution may be suppressed or reduced, so that the generation of a resistance layer such as a NiO phase may be suppressed or reduced. In one or more embodiments, the elution of nickel ions may be also suppressed or reduced. Changes in the volume of the composite positive electrode active material during charging and discharging may be easily received, thereby suppressing or reducing the occurrence of cracks inside the composite positive electrode active material because the shell including graphene has flexibility. Interface resistance between the composite positive electrode active material and the electrolyte solution may be reduced because graphene has relatively high electronic conductivity. Therefore, despite the introduction of the shell including graphene, the internal resistance of a lithium battery may be maintained or reduced.

In one or more embodiments, the deterioration of the lithium transition metal oxide included in the core may be prevented or reduced during charging and discharging at relatively high voltages because the first metal oxide has voltage resistance. As a result, the cycle properties and relatively high-temperature stability of a lithium battery including the composite positive electrode active material may be improved. The shell may include, for example, one type or kind of first metal oxide or two or more types (kinds) of different first metal oxides. In the composite positive electrode active material, the lithium transition metal oxide may have a relatively high nickel content (*e*.*g*., amount) of about 80 mol% or greater with respect to the total number of moles of the transition metal(s), and the shell including the first metal oxide and graphene may be arranged on the core, so that relatively high discharge capacity and cycle properties may be concurrently (*e*.*g*., simultaneously) provided. Therefore, the composite positive electrode active material having a relatively high nickel content (*e*.*g*., amount) of about 80 mol% or greater may still provide excellent or suitable lifespan properties, while providing improved capacity compared to a composite positive electrode active material having a relatively low nickel content (*e*.*g*., amount). A metal included in the first metal oxide may be, for example, one or more of (e.g., one or more selected from among) Al, Nb, Mg, Sc, Ti, Zr, V, W, Mn, Fe, Co, Pd, Cu, Ag, Zn, Sb, and/or Se.

The first metal oxide may be, for example, one or more of (e.g., one or more selected from among) Al₂O_{z}(0<z<3), NbOₓ(0<x<2.5), MgOₓ(0<x<1), Sc₂O_{z}(0<z<3), TiO_{y}(0<y<2), ZrO_{y}(0<y<2), V₂O_{z}(0<z<3), WO_{y}(0<y<2), MnO_{y}(0<y<2), Fe₂O_{z}(0<z<3), Co₃O_{w}(0<w<4), PdOₓ(0<x<1), CuOₓ(0<x<1), AgOₓ(0<x<1), ZnOₓ(0<x<1), Sb₂O_{z} (0<z<3), and/or SeO_{y}(0<y<2). The uniformity of the shell arranged on the core may be improved and the voltage resistance of the composite positive electrode active material may be further improved because the first metal oxide as described above is arranged in the graphene matrix. For example, the shell may include Al₂Oₓ(0<x<3) as the first metal oxide. The shell may further include one or more types (kinds) of second metal oxide represented by Formula MₐO_{c} (0<a≤3 and 0<c≤4, if a is 1, 2, or 3, c is an integer). M above is one or more metals of (*e*.*g*., selected from among) Groups 2 to 13, 15, and/or 16 of the Periodic Table of Elements. For example, the second metal oxide may include the same metal as the metal included in the first metal oxide, and c/a, in which a ratio of a and c of the second metal oxide may have a greater value than b/a, which is a ratio of a and b of the first metal oxide. For example, c/a > b/a. The second metal oxide may be (*e*.*g*., may be selected from among), for example, Al₂O₃, NbO, NbO₂, Nb₂O₃, MgO, Sc₂O₃, TiO₂, ZrO₂, V₂O₃, WO₂, MnO₂, Fe₂O₃, Co₃O₄, PdO, CuO, AgO, ZnO, Sb₂O₃, and/or SeO₂. The first metal oxide is a reduction product of the second metal oxide. The first metal oxide is obtained by reducing a part or all of the second metal oxide. Therefore, the first metal oxide may have a lower oxygen content (*e*.*g*., amount) and may have a lower oxidation number of the metal than the second metal oxide. For example, the shell may include Al₂Oₓ(0<x<3), which is the first metal oxide, and Al₂O₃, which is the second metal oxide. In the composite positive electrode active material, for example, the graphene included in the shell and a transition metal of the lithium transition metal oxide included in the core may be chemically bound through a chemical bond. A carbon atom (C) of the graphene included in the shell and a transition metal (Me) of the lithium transition metal oxide may be chemically bound, for example, through a C-O-Me bond, which are mediated by an oxygen atom (*e*.*g*., CO-Ni bond). The graphene included in the shell and the lithium transition metal oxide included in the core may be chemically bound through a chemical bond, so that the core and the shell may be a composite (*e*.*g*., composited). Therefore, it is distinguished from a simple physical mixture of graphene and a lithium transition metal oxide. In one or more embodiments, the first metal oxide and the graphene included in the shell may be also chemically bound through a chemical bond. The chemical bond may be, for example, a covalent bond or an ionic bond. The covalent bond is a bond including, for example, at least one of an ester group, an ether group, a carbonyl group, an amide group, a carbonate anhydride group, and/or an acidic anhydride. The ionic bond is a bond including, for example, carboxylic acid ions, ammonium ions, acyl cation groups, and/or the like. The thickness of the shell may be, for example, about 1 nanometer (nm) to about 5 micrometers (µm), about 1 nm to about 1 µm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. An increase in the internal resistance of the lithium battery including the composite positive electrode active material may be suppressed or reduced because the thickness of the shell falls within the above-described ranges.

An amount of the composite included in the composite positive electrode active material may be about 3 wt% or less, about 2 wt% or less, about 1 wt% or less, about 0.5 wt% or less, or about 0.2 wt% or less with respect to the total weight of the composite positive electrode active material. The amount of the composite may be about 0.01 wt% to about 3 wt%, about 0.01 wt% to about 1 wt%, about 0.01 wt% to about 0.7 wt%, about 0.01 wt% to about 0.6 wt%, about 0.1 wt% to about 0.5 wt%, about 0.01 wt% to about 0.2 wt%, about 0.01 wt% to about 0.1 wt%, or about 0.03 wt% to about 0.07 wt% with respect to the total weight of the composite positive electrode active material. The cycle properties of the lithium battery including the composite positive electrode active material may be further improved because the amount of the composite included in the composite positive electrode active material falls within the above ranges. An average particle diameter of one or more of (*e*.*g*., one or more selected from among) the first metal oxide and/or the second metal oxide (*e*.*g*., the average particle diameter of particles of each of the first metal oxide and/or the second metal oxide) included in the composite may be about 1 nm to about 1 µm, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. The first metal oxide and/or the second metal oxide may be more uniformly (substantially uniformly) distributed in the graphene matrix of the composite because the particle diameter thereof falls within the above-described nano-scale range. Therefore, the composite described above may be uniformly (substantially uniformly) applied on the core without agglomeration to thereby form (or provide) a shell. In one or more embodiments, the first metal oxide and/or the second metal oxide may be more uniformly (substantially uniformly) arranged on the core because the particle diameters thereof fall within the above-described ranges. Therefore, voltage resistance properties may be more effectively exhibited because the first metal oxide and/or the second metal oxide are uniformly (substantially uniformly) arranged on the core. The average particle diameter of the first metal oxide and/or the second metal oxide may be measured by utilizing, for example, a measuring device utilizing a laser diffraction method or dynamic light scattering method. The average particle diameter is the value of the median particle diameter (D50) if (*e*.*g*., when) 50% of the cumulative volume is reached starting from the smallest particle size, and it may be measured, for example, utilizing a laser scattering particle size analyzer (such as Horiba LA-920) and converting the data to volume.

The core included in the composite positive electrode active material includes, for example, a lithium transition metal oxide represented by one or more of Formulas 1 to 8:

Formula 1 LiₐCOₓM_{y}O_{2-b}A_{b}

In Formula 1 above, 1.0≤a≤1.2, 0≤b≤0.2, 0.9≤x≤1, 0≤y≤0.1, x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), and/or any suitable combination thereof, and A may be fluorine (F), sulfur (S), chlorine (Cl), bromine (Br), and/or any suitable combination thereof.

Formula 2 LiₐNiₓCo_{y}M_{z}O_{2-b}A_{b}

In Formula 2 above, 1.0≤a≤1.2, 0≤b≤0.2, 0.8≤x<1, 0≤y≤0.2, 0<z≤0.2, x+y+z=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), and/or any suitable combination thereof, and A may be F, S, Cl, Br, and/or any suitable combination thereof.

Formula 3 LiNiₓCo_{y}Mn_{z}O₂

Formula 4 LiNiₓCo_{y}Al_{z}O₂

In Formulas 3 and 4 above, 0.8≤x≤0.95, 0≤y≤0.2, 0<z≤0.2, and x+y+z=1.

Formula 5 LiNiₓCo_{y}Mn_{z}Al_{w}O₂

In Formula 5 above, 0.8≤x≤0.95, 0≤y≤0.2, 0<z≤0.2, 0<w≤0.2, and x+y+z+w=1.

Formula 6 LiₐNiₓMn_{y}M'_{z}O_{2-b}A_{b}

In Formula 6 above, 1.0≤a≤1.2, 0≤b≤0.2, 0<x≤0.3, 0.5≤y<1, 0<z≤0.3, and x+y+z=1, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), and/or any suitable combination thereof, and A may be F, S, Cl, Br, and/or any suitable combination thereof.

Formula 7 LiₐM1ₓM2_{y}PO_{4-b}X_{b}

In Formula 7 above, 0.90≤a≤1.1, 0≤x≤0.9, 0≤y≤0.5, 0.9<x+y<1.1, and 0≤b≤2, M1 may be chromium (Cr), manganese (Mn), iron (Fe), cobalt (Co), nickel (Ni), copper (Cu), zirconium (Zr), and/or any suitable combination thereof, M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), and/or any suitable combination thereof, and X may be O, F, S, P, and/or any suitable combination thereof.

Formula 8 LiₐM3_{z}PO₄

In Formula 8 above, 0.90≤a≤1.1, and 0.9≤z≤1.1, M3 may be chromium (Cr), manganese (Mn), iron (Fe), cobalt (Co), nickel (Ni), copper (Cu), zirconium (Zr), and/or any suitable combination thereof.

An amount of the positive electrode active material included in the dry electrode film may be, for example, about 80 wt% to about 98 wt%, or about 90 wt% to about 98 wt% with respect to the total weight of the dry electrode film.

For example, if the dry electrode film is a negative electrode film, the dry electrode active material may include a negative electrode active material.

For example, the negative electrode active material may be any suitable negative electrode active material generally available and/or generally utilized as a negative electrode active material of a lithium battery in the art. For example, one or more of (*e*.*g*., one or more selected from among) the group including (*e*.*g*., consisting of) a lithium metal, a metal alloyable with lithium, a transition metal oxide, a non-transition metal oxide, and/or a carbon-based material may be included. The metal alloyable with lithium may be, for example, Si, Sn, Al, Ge, Pb, Bi, Sb, a Si-Y alloy (wherein the Y is an alkali metal, an alkali earth metal, a Group 13 element, a Group 14 element, a transition metal, a rare earth element, and/or any suitable combination thereof, but not Si), an Sn-Y alloy (wherein the Y is an alkali metal, an alkali earth metal, a Group 13 element, a Group 14 element, a transition metal, a rare earth element, and/or any suitable combination thereof, but not Sn), and/or the like. The element Y may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and/or any suitable combination thereof. The transition metal oxide may be, for example, lithium titanium oxide, vanadium oxide, lithium vanadium oxide, and/or the like. The non-transition metal oxide may be, for example, SnOₓ(0<x≤2), SiOₓ(0<x≤2), and/or the like. The carbon-based material may be, for example, crystalline carbon, amorphous carbon, and/or any suitable mixture thereof. The crystalline carbon may be, for example, graphite such as non-shaped, plate-shaped (*e*.*g*., in a form of plates), flake-shaped, spherical, or fibrous natural graphite or artificial graphite. The amorphous carbon may be, for example, soft carbon (low temperature fired carbon) or hard carbon, mesophase pitch carbide, fired coke, and/or the like.

An amount of the negative electrode active material included in the dry electrode film may be, for example, about 80 wt% to about 98 wt%, or about 90 wt% to about 98 wt% with respect to the total weight of the dry electrode film.

For example, the dry electrode film may include a dry binder, wherein the dry binder may not be impregnated, dissolved, or dispersed in the processing solvent during the process of manufacturing the dry electrode film. The dry binder may be, for example, a binder that includes no processing solvent or does not contact with the processing solvent in the process of manufacturing a dry electrode film. The dry binder may be a fibrillized binder or a fibrous binder. The fibrillized binder or fibrous binder may serve as a matrix that supports and binds a dry electrode active material and other ingredients, each included in the dry electrode film. It can be confirmed that the fibrillized binder or fibrous binder may have, for example, a fibrous shape (*e*.*g*., in a form of fibers) as shown, for example, in the scanning electron microscope image of FIG. 4, which shows a cross-section of the dry electrode film. The fibrillized binder may have an aspect ratio (*e*.*g*., a ratio of length to width in an image) of, for example, about 10 or more, about 20 or more, about 50 or more, or about 100 or more.

The dry binders may each independently include, for example, polytetrafluoroethylene (PTFE), a polyvinylidene fluoride-co-hexafluoropropylene (PVDF-HFP) copolymer, polyvinylidene fluoride (PVDF), polyvinyl alcohol (PVA), polyacrylonitrile (PAN), carboxy methyl cellulose (CMC), starch, hydroxy propyl cellulose, cellulose, polyvinylpyrrolidone (PVP), polyethylene (PE), polypropylene (PP), ethylene-propylene-diene monomer (EPDM) rubber, sulfonated-EPDM rubber, styrene-butadiene rubber (SBR), fluorine-containing rubber, and/or any suitable combination thereof, but the present disclosure is not limited thereto, and any suitable binder that is generally available and/or generally utilized in the manufacture of the dry electrode may be utilized. For example, the dry binder may include a fluorine-based binder. The fluorine-based binder may be, for example, polytetrafluoroethylene (PTFE), a polyvinylidene fluoride-co-hexafluoropropylene (PVDF-HFP) copolymer, polyvinylidene fluoride (PVDF), and/or any suitable combination thereof.

The dry binder may have a glass transition temperature (T_{g}) of, for example, about -30 °C to about 150 °C, about 15 °C to about 150 °C, about 15 °C to about 130 °C, about 50 °C to about 130 °C, about 100 °C to about 130 °C, or about 120 °C to about 130 °C. A first dry binder may have a glass transition temperature (T_{g}) of, for example, about -30 °C to about 150 °C, about 15 °C to about 150 °C, about 15 °C to about 130 °C, about 50 °C to about 130 °C, about 100 °C to about 130 °C, or about 120 °C to about 130 °C. A second dry binder may have a glass transition temperature (T_{g}) of, for example, about -30 °C to about 150 °C, about 15 °C to about 150 °C, about 15 °C to about 130 °C, about 50 °C to about 130 °C, about 100 °C to about 130 °C, or about 120 °C to about 130 °C. Polytetrafluoroethylene (PTFE) may have a glass transition temperature of, for example, about 120 °C to about 130 °C. A fibrillized binder or a fibrous binder may be more easily obtained in a dry electrode manufacturing process because the glass transition temperature of the dry binder falls within the above-described ranges. The glass transition temperature (T_{g}) of the dry binder may be determined from Differential Scanning Calorimetry (DSC).

An amount of the dry binder may be, for example, about 0.1 wt% to about 5 wt%, about 0.5 wt% to about 4 wt%, or about 1 wt% to about 3 wt% with respect to the total weight of the dry electrode film. The dry electrode film may have improved binding and may maintain relatively high energy density because the dry electrode film contains the dry binder in these amount ranges. The amount of the dry binder may be, for example, about 0.1 wt% to about 5 wt%, about 0.5 wt% to about 4 wt%, or about 1 wt% to about 3 wt% with respect to the total weight of the dry electrode film.

The dry electrode film may further include, for example, a conductive material. The conductive material may be, for example, a dry conductive material. The dry conductive material may be, for example, a conductive material that is not impregnated, dissolved, or dispersed in a processing solvent in the dry electrode film manufacture process. The dry conductive material may be, for example, a conductive material that includes no processing solvent or does not contact the processing solvent in the dry electrode film manufacture process. The dry conductive material may include, for example, a carbon-based conductive material. The carbon-based conductive material may contain, for example, a fibrous carbon-based material having an aspect ratio of 10 or more, a particulate carbon-based material having an aspect ratio of 5 or less, and/or any suitable combination thereof. The dry conductive material may contain, for example, the dry conductive material arranged in the dry electrode film.

The fibrous carbon-based material having an aspect ratio of 10 or greater may be carbon fibers, carbon nanotubes, carbon nanobelts, and/or the like, but the present disclosure is not limited thereto, and any suitable carbon-based conductive material generally available and/or generally utilized in the art may be utilized.

The particulate carbon-based material having an aspect ratio of 5 or less may be, for example, carbon black, acetylene black, Ketjen black, natural graphite, artificial graphite, and/or the like, but the present disclosure is not limited thereto, and any suitable carbon-based conductive material generally available and/or generally utilized in the art may be utilized. The particulate carbon-based material may have an aspect ratio of, for example, about 1 to about 5, about 1 to about 4, about 1 to about 3, or about 1 to about 2.

For example, an amount of the dry conductive material contained in the dry electrode film may be, for example, about 0.1 wt% to about 5 wt%, about 0.5 wt% to about 4 wt%, or about 1 wt% to about 3 wt% with respect to the total weight of the dry electrode film. The amount of the dry conductive material contained in the dry electrode film, which is the electrode active material layer 120, may be, for example, about 0.1 wt% to about 5 wt%, about 0.5 wt% to about 4 wt%, or about 1 wt% to about 3 wt% with respect to the total weight of the dry electrode film. If the dry electrode film includes these ranges of the dry conductive material, the conductivity of the dry electrode film may be improved, and cycle characteristics of a lithium battery including the dry electrode film may be improved.

The dry electrode film may be free of the residual processing solvent. The dry electrode film may include a dry electrode active material, a dry binder, and a dry conductive material, and may be free of a residual processing solvent because the processing solvent, which may not be intentionally utilized in the dry electrode film, is not utilized in the dry electrode film manufacturing process. The dry electrode film, which is the electrode active material layer 120, is manufactured in a dry manner and thus does not contain the processing solvent that is intentionally added. A small amount of solvent, which is not intended, may remain within the dry electrode film, which is the electrode active material layer 120, but such a solvent is not an intentionally added processing solvent. Therefore, the dry electrode film, which is the electrode active material layer 120, may be distinguished from the wet electrode active material layer manufactured by mixing ingredients and a processing solvent and then drying to thereby remove a portion or whole of the processing solvent.

According to one or more embodiments, the internal electrode active material layer 122 may include a first dry electrode film containing the first dry electrode active material and the first dry binder, and the external electrode active material layer 121 may include a second dry electrode film containing the second dry electrode active material and the second dry binder.

According to one or more embodiments, the first dry electrode active material may be the same as the second dry active material. According to one or more embodiments, the first dry electrode active material may be different from the second dry active material.

According to one or more embodiments, two or more electrode current collectors 110 may be arranged in the thickness direction inside the electrode active material layer 120. In one or more embodiments, two or more electrode current collectors 110 may be arranged by extending from (*e*.*g*., penetrating) the electrode active material layer 120. For example, regions of two or more electrode current collectors 110 that are exposed to the outside by extending from (*e*.*g*., penetrating) the electrode active material layer 120 may each be connected to an electrode tab. For example, the electrode current collector 110 may include a porous structure, which leads to increases in electrical networks between the electrode active material contained in the electrode active material layer 120, and thus the internal resistance of the electrode 100 may decrease. Therefore, the lithium battery including the electrode 100 may have improved rapid charging and discharging characteristics.

For example, the porous structure may be arranged in the region located inside of the electrode active material layer 120 among the electrode current collectors 110, and the exposed region to the outside of the electrode active material layer 120 among the electrode current collectors 110 may contain no porous structure.

According to one or more embodiments, the porous structure may include a mesh (*e*.*g*., ordered porous) structure or a foam (*e*.*g*., random porous) structure.

According to one or more embodiments, the porous structure may have a porosity of about 5 vol% to about 95 vol% (where the porosity is a volume of pores relative to the total volume multiplied by 100). For example, the porous structure may have the porosity of about 10 vol% to about 90 vol%, about 20 vol% to about 80 vol%, or about 30 vol% to about 70 vol%. According to one or more embodiments, a volume per unit volume of pores contained in the porous structure may be about 10 vol% to about 90 vol% relative to the volume of the region of the current collector located inside of the electrode active material layer. For example, the volume per unit volume of pores contained in the porous structure may be about 15 vol% to about 85 vol%, or about 20 vol% to about 80 vol%. For example, if the porosity or a size of pores of the porous structure contained in the electrode current collector 110 falls within the above-described ranges, electrical networks between electrode active material contained in the electrode active material layer 120 may further increase, and thus the internal resistance of the electrode 100 may further decrease. The porosity of the porous structure and the volume per unit volume of pores contained in the porous structure may be measured by cross-section analysis of particles using a focused ion beam (FIB) or mercury intrusion.

According to one or more embodiments, materials constituting the electrode current collector 110 may be materials that do not react with lithium, and any materials that do not form an alloy or compound with lithium and have conductivity (*e*.*g*., are a conductor) may be utilized. The metal substrate may be, for example, a metal or an alloy. The metal substrate may be made of, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or any suitable alloy thereof.

Referring to FIG. 2, the electrode current collectors 110 may further include a second current collector 115 arranged between an upper electrode current collector 111 and a lower electrode current collector 112. For example, the second electrode current collector 115 may be arranged by penetrating the electrode active material layer 120 in substantially the same way as the upper electrode current collector 111 and the lower electrode current collector 112. In one or more embodiments, among the upper electrode current collector 111, an exposed region to the outside of the electrode active material layer 120 and, among the lower electrode current collector 112, an exposed region to the outside of electrode active material layer 120 may be each electrically connected to an exposed region of the second electrode current collector 115 that is outside of the electrode active material layer 120. For example, including the second electrode current collector 115, the exposed region of the current collectors 110 outside of the electrode active material layer 120 may function as an electrode tab.

According to one or more embodiments, the second electrode current collector may be free of the above-described porous structure. According to one or more embodiments, the second electrode current collector may also include the above-described porous structure.

According to one or more embodiments, the electrode 100 may meet at least one of Condition 1 and/or Condition 2:

### Condition 1

In the electrode active material, a thickness of the region arranged between the second electrode current collector 115 and the upper electrode current collector 111 may be greater than the thickness of the external electrode active material layer 121 of the electrode active material layer 120 above the upper electrode current collector 111.

### Condition 2

In the electrode active material, the thickness of the region arranged between the second electrode current collector 115 and the lower electrode current collector 112 may be greater than the thickness of the external electrode active material layer 121 of the electrode active material layer 120 below the lower electrode current collector 112.

For example, if the electrode 100 meets the conditions above, the distances between the electrode active material and the electrode current collectors 110, which are contained in the electrode active material layer 120, may further decrease, and thus the internal resistance of the electrode 100 may further decrease.

According to one or more embodiments, the electrode current collector 110 may be in the form of (*e*.*g*., selected from among) a sheet, a foil, a film, a plate, a porous structure, a mesoporous structure, a through-hole-containing structure, a polygonal ring structure, a mesh structure, a foam structure, and/or a non-woven fabric structure, but the present disclosure is not limited thereto, and any suitable form generally available and/or generally utilized in the art may be utilized.

The electrode current collector 110 may have a reduced thickness compared to an electrode current collector 110 included in an electrode of the related art. Therefore, the electrode according to one or more embodiments may include, for example, a thin film current collector, thereby being distinct from an electrode of the related art including a thick current collector. The electrode according to one or more embodiments adopts a thin-film current collector having a reduced thickness, and thus the thickness of the electrode active material layer may relatively increase in the electrode including the thin-film current collector. Therefore, the energy density of a lithium battery that adopts the electrode described above may increase. The electrode current collector 110 (*e*.*g*., each of the electrode current collectors 110) may include a metal substrate and an interlayer and may have a thickness of, for example, less than 15 µm, 14.5 µm or less, or 14 µm or less. The electrode current collector 110 (*e*.*g*., each of the electrode current collectors 110) may have a thickness of, for example, 0.1 µm or more and less than 15 µm, about 1 µm to about 14.5 µm, about 2 µm to about 14 µm, about 3 µm to about 14 µm, about 5 µm to about 14 µm, or about 10 µm to about 14 µm.

The electrode current collector 110, may include, for example, a base film and a metal layer arranged on one side or both sides (*e*.*g*., opposite sides) of the base film. The electrode current collector 110 may include a substrate, and the substrate may have, for example, a structure including a base film and a metal layer arranged on one side or both sides (*e*.*g*., opposite sides) of the base film. The above-described interlayer may be additionally arranged on the metal layer. The base film may include, for example, a polymer. The polymer may be, for example, a thermoplastic polymer. Examples of the polymer may include polyethylene terephthalate (PET), polyethylene (PE), polypropylene (PP), polybutylene terephthalate (PBT), polyimide (PI), and/or any suitable combination thereof. Due to the inclusion of a thermoplastic polymer in the base film, the base film may be melted in the event of a short circuit and thus may prevent or reduce a rapid increase in electric current. The base film may be, for example, an insulator. The metal layer may include, for example, copper (Cu), stainless steel, titanium (Ti), iron (Fe), cobalt (Co), nickel (Ni), and/or any suitable alloy thereof. The metal layer may be disconnected in the event of an overcurrent, thereby acting as an electrochemical fuse, and therefore may provide protection against a short circuit. A limiting current and peak current may be adjusted by adjusting the thickness of the metal layer. The metal layer may be plated or deposited on the base film. If the thickness of the metal layer is reduced, the limit current and/or the peak current of the electrode current collector 110 may be reduced, so that stability of the lithium battery in the event of a short circuit may be improved.

A lead tab may be added on the metal layer for external connection. The lead tab may be welded to the metal layer or a metal layer/base film laminate by ultrasonic welding, laser welding, spot welding, and/or the like. As the base film and/or the metal layer melt during welding, the metal layer may be electrically connected to the lead tab. To further secure the welding between the metal layer and the lead tab, a metal chip may be added between the metal layer and the lead tab. The metal chip may be a flake of the same material as the metal of the metal layer. For example, the metal chip may be a metal foil, a metal mesh, and/or the like. For example, the metal chip may be an aluminium foil, copper foil, stainless steel (SUS) foil, and/or the like. By welding the lead tab after placing the metal chip on the metal layer, the lead tab may be welded to a metal chip/metal layer laminate or a metal chip/metal layer/base film laminate.

As the base film, the metal layer, and/or the metal chip melt during welding, and the metal layer or the metal layer/metal chip laminate may be electrically connected to the lead tab. A metal chip and/or a lead tab may be further added to a portion of the metal layer. The base film may have a thickness of about 1 µm to about 50 µm, about 1.5 µm to about 50 µm, about 1.5 µm to about 40 µm, or about 1 µm to about 30 µm. If the base film has a thickness within the above ranges, a reduction in the weight of an electrode assembly may be more effectively achieved. For example, the base film may have a melting point of about 100 °C to about 300 °C, about 100 °C to about 250 °C, or about 100 °C to about 200 °C. If the melting point of the base film falls within the above ranges, the base film may melt and be easily bonded to the lead tab during the welding process of the lead tab. To improve adhesion between the base film and the metal layer, a surface treatment such as the corona treatment may be performed on the base film.

The metal layer may have a thickness of, for example, about 0.01 µm to about 3 µm, about 0.1 µm to about 3 µm, about 0.1 µm to about 2 µm, or about 0.1 µm to about 1 µm. If the thickness of the metal layer falls within the above-described ranges, the stability of the electrode assembly may be secured while maintaining conductivity. The metal chip may have a thickness of, for example, about 2 µm to about 10 µm, about 2 µm to about 7 µm, or about 4 µm to about 6 µm. If the thickness of the metal chip falls within these ranges, the connection between the metal layer and the lead tab may be more easily performed. The weight of the electrode may decrease and consequently, the energy density may be improved because the electrode current collector 110 has a structure as described above. The electrode current collector 110 may be, for example, a positive electrode current collector. The electrode current collector 110 may be, for example, a negative electrode current collector.

The dry electrode 100 may further include an interlayer arranged between the electrode active material layer 120 and one of the two or more the electrode current collectors 110.

The interlayer may be, for example, directly arranged on a side (*e*.*g*., one side or both sides (e.g., opposite sides)) of the electrode current collector 110. Therefore, no intervening layer may be arranged between the electrode current collector 110 (*e*.*g*., at least one of the electrode current collectors) and the interlayer. The interlayer is arranged on one side or both sides (*e*.*g*., opposite sides) of the electrode current collector 110, and thus adhesion between the substrate and the electrode active material layer 120 may be further improved.

The interlayer may have a thickness of, for example, 30% or less of the thickness of the electrode current collector 110. The interlayer may have the thickness of, for example, about 0.01% to about 30%, about 0.1% to about 30%, about 0.5% to about 30%, about 1% to about 25%, about 1% to about 20%, about 1% to about 15%, about 1% to about 10%, about 1% to about 5%, or about 1% to about 3%, with respect to the thickness of the electrode current collector 110. The interlayer may have a thickness of, for example, about 10 nm to about 5 µm, about 50 nm to about 5 µm, about 200 nm to about 4 µm, about 500 nm to about 3 µm, about 500 nm to about 2 µm, about 500 nm to about 1.5 µm, or about 700 nm to about 1.3 µm. If the thickness of the interlayer falls within these ranges, adhesion between the electrode current collector 110 and the electrode active material layer 120 may further increase, and an increase in interface resistance may be suppressed or reduced.

The interlayer may include, for example, a binder. An adhesion between the electrode current collector and the electrode active material layer may be further improved because the interlayer contains the binder. The binder included in the interlayer may be, for example, a conductive binder or a non-conductive binder.

The conductive binder may be, for example, an ionically conductive binder and/or an electronically conductive binder. The binder having both (*e*.*g*., simultaneously) ionic conductivity and electronical conductivity may be classified as both (*e*.*g*., simultaneously) an ionically conductive binder and an electronically conductive binder.

The ionically conductive binder may be, for example, polystyrene sulfonate (PSS), a polyvinylidene fluoride-co-hexafluoropropylene (PVDF-HFP) copolymer, polyvinyl fluoride (PVF), polyvinylidene fluoride (PVDF), poly(methylmethacrylate) (PMMA), polyethylene oxide (PEO), polyethylene glycol (PEG), polyacrylonitrile (PAN), polytetrafluoroethylene (PTFE), polyethylene dioxythiophene (PEDOT), polypyrrole (PPY), polyacrylonitrile (PAN), polyaniline, polyacetylene, and/or the like. The ionically conductive binder may include a polar functional group. The ionically conductive binder including the polar functional group may be, for example, Nafion, Aquivion, Flemion, Gore, Aciphex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), sulfonated poly[bis (benzimidazobenzisoquinolinones)] (SPBIBI), poly(styrene sulfonate) (PSS), lithium 9,10-diphenylanthracene-2-sulfonate (DPASLi+), and/or the like. The electronically conductive binder may be, for example, polyacetylene, polythiophene, polypyrrole, poly(p-phenylene), poly(phenylene vinylene), poly(phenylene sulfide), polyaniline, and/or the like. The interlayer may be, for example, a conductive layer containing a conductive polymer.

The binder contained in the interlayer may be (*e*.*g*., may be selected from among), for example, binders contained in the electrode active material layer. The interlayer may contain substantially the same binder as the electrode active material layer. The binder included in the interlayer may be, for example, a fluorine-based binder. The fluorine-based binder included in the interlayer may be, for example, a polyvinylidene fluoride (PVDF). The interlayer may be arranged on the electrode current collector, for example, in a dry or wet manner. The interlayer may be, for example, a binding layer including a binder.

The interlayer may additionally include, for example, a carbon-based conductive material. The carbon-based conductive material contained in the interlayer may be (*e*.*g*., may be selected from among) carbon-based conductive materials contained in the electrode active material layer. The interlayer may contain substantially the same carbon-based conductive material as the electrode active material layer. The interlayer may be, for example, a conductive layer due to the inclusion of the carbon-based conductive material. The interlayer may be, for example, a conductive layer including a binder and a carbon-based conductive material.

The interlayer may be arranged on the electrode current collector in a dry manner, for example, by a deposition such as CVD, or PVD. The interlayer may be arranged on the electrode current collector in a wet manner by, for example, a spin coating, a dip coating, and/or the like. The interlayer may be arranged on the electrode current collector by, for example, depositing a carbon-based conductive material on the electrode current collector. The dry-coated interlayer may be made of a carbon-based conductive material and may not include a binder. In one or more embodiments, the interlayer may be arranged on the electrode current collector 110 by, for example, applying a composition including the carbon-based conductive material, a binder, and a solvent onto the surface of the electrode current collector, and drying. The interlayer may be a single-layered structure or a multi-layered structure including a plurality of layers.

A lithium battery according to one or more embodiments includes a positive electrode, a negative electrode, and an electrolyte arranged between the positive electrode and the negative electrode, wherein at least one of the positive electrode and/or the negative electrode is the electrode 100. The cycle characteristics of the lithium battery may be improved because the lithium battery includes the above-described electrode 100.

In one or more embodiments, one electrode among the positive electrode and the negative electrode may be the above-described electrode 100, and another electrode may be manufactured by a wet manufacturing method. For example, another electrode may be manufactured by preparing an electrode slurry containing an electrode active material, a conductive material, a binder, and a solvent, and applying the prepared electrode slurry onto the electrode current collector and drying. The conductive material and the binder included in the electrode manufactured in a wet manner may be (*e*.*g*., may be selected from among) the conductive material and the binder utilized in the manufacture of the above-described dry electrode.

Next, a separator to be inserted between the positive electrode and the negative electrode is prepared.

The separator may be any suitable separator generally available and/or generally utilized in a lithium battery. As the separator, for example, a separator having relatively low resistance to ion movement of an electrolyte and excellent or suitable electrolyte solution moisture retention ability may be utilized. The separator may be (*e*.*g*., may be selected from among), for example, glass fiber, polyester, Teflon, polyethylene, polypropylene, polytetrafluoroethylene (PTFE), and/or any suitable combination thereof, and may be in the form of a non-woven or woven fabric. A windable separator such as polyethylene, polypropylene, and/or the like may be utilized in a lithium-ion battery, and a separator having excellent or suitable organic electrolyte solution impregnation ability may be utilized in a lithium-ion polymer battery.

The separator may be manufactured by the following example method but the present disclosure is not necessarily limited to the following method and may be adjusted according to desired or required conditions.

First, a separator composition may be prepared by mixing a polymer resin, a filler, and a solvent. The separator composition may be directly applied and dried onto a top surface of the electrode to form (or to provide) a separator. In one or more embodiments, the separator composition may be cast and dried onto a support, and then a separator film peeled off from the support may be laminated on the top surface of the electrode to form (or provide) a separator.

The polymer utilized in the manufacture of the separator is not limited, and any suitable polymer generally available and/or generally utilized in a binder of an electrode plate may be utilized. For example, a vinylidene fluoride/hexafluoropropylene copolymer, polyvinylidene fluoride (PVDF), polyacrylonitrile, polymethyl methacrylate, and/or any suitable mixture thereof may be utilized.

Next, the electrolyte is prepared.

The electrolyte may be, for example, a liquid electrolyte, a solid-state electrolyte, a gel electrolyte, and/or any suitable combination thereof.

The electrolyte may be, for example, an organic electrolyte solution. The organic electrolyte solution may be prepared by dissolving a lithium salt in an organic solvent.

The organic solvent may be any suitable organic solvent generally available and/or generally utilized in the art. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, γ-butyrolactone, dioxolane, 4-methyldioxolane, N, N-dimethylformamide, dimethylacetamide, dimethylsulfoxide, dioxane, 1,2-dimethoxyethane, sulfolane, dichloroethane, chlorobenzene, nitrobenzene, diethylene glycol, dimethylether, any suitable mixture thereof, and/or the like.

The lithium salt may be any suitable lithium salt generally available and/or generally utilized in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (1≤x≤20, 1≤y≤20), LiCl, Lil, and/or any suitable mixture thereof. The concentration of the lithium salt may be, for example, about 0.1 M to about 5.0 M.

The solid-state electrolyte may be, for example, an oxide-based solid electrolyte, a sulfide-based solid electrolyte, a polymer solid electrolyte, and/or any suitable combination thereof.

The solid-state electrolyte may be, for example, an oxide-based solid electrolyte. The oxide-based solid electrolyte may be one or more of (e.g., one or more selected from among) Li_{1+x+y}AlₓTi₂₋ₓSi_{y}P_{3-y}O₁₂ (0<x<2, 0≤y<3), BaTiO₃, Pb(Zr, Ti)O₃ (PZT), Pb₁₋ₓLaₓZr_{1-y}Ti_{y}O₃ (PLZT) (0≤x<1, 0≤y<1), Pb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂ (0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, and/or Li₃₊ₓLa₃M₂O₁₂ (M = Te, Nb, or Zr, and x may be an integer of 1 to 10). The solid-state electrolyte may be produced by, for example, a sintering method, and/or the like. For example, the oxide-based solid electrolyte may be a garnet-type or kind solid electrolyte of (e.g., selected from among) Li₇La₃Zr₂O₁₂(LLZO) and/or Li₃₊ₓLa₃Zr₂₋ₐMₐO₁₂ (M-doped LLZO, M=Ga, W, Nb, Ta, or Al, and x is an integer of 1 to 10).

The sulfide-based solid electrolyte may include lithium sulfide, silicon sulfide, phosphorus sulfide, boron sulfide, and/or any suitable combination thereof. The sulfide-based solid electrolyte particles may include Li₂S, P₂S₅, SiS₂, GeS₂, B₂S₃, and/or any suitable combination thereof. The sulfide-based solid electrolyte particles may be Li₂S or P₂S₅. The sulfide-based solid electrolyte particles generally have a higher lithium-ion conductivity than that of other inorganic compounds. For example, the sulfide-based solid electrolyte may include Li₂S and P₂S₅. If the sulfide solid electrolyte material constituting the sulfide-based solid electrolyte includes Li₂S-P₂S₅, the mixed molar ratio of Li₂S to P₂S₅ may be, for example, in the range of about 50:50 to about 90:10. In one or more embodiments, an inorganic solid electrolyte prepared by adding Li₃PO₄, halogen, halogen compounds, Li₂₊₂ₓZn₁₋ₓGeO₄("LISICON", 0≤x<1), Li_{3+y}PO₄₋ₓNₓ ("LIPON", 0<x<4, 0<y<3), Li_{3.25}Ge_{0.25}P_{0.75}S₄ ("ThioLISICON"), Li₂O-Al₂O₃-TiO₂-P₂O₅ ("LATP"), and/or the like, to an inorganic solid electrolyte of Li₂S-P₂S₅, SiS₂, GeS₂, B₂S₃, and/or any suitable combination thereof, may be utilized as the sulfide solid electrolyte. Non-limiting examples of the sulfide solid electrolyte material may include Li₂S-P₂S₅; Li₂S-P₂S₅-LiX (X= a halogen element); Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-Lil; Li₂S-SiS₂-P₂S₅-LiI; Li₂S-B₂S₃; Li₂S -P₂S₅-ZₘSₙ (0<m<10, 0<n<10, Z=Ge, Zn, or Ga); Li₂S-GeS₂; Li₂S-SiS₂-Li₃PO₄; and/or Li₂S-SiS₂-LiₚMO_{q} (0<p<10, 0<q<10, and M=P, Si, Ge, B, Al, Ga, or In). In this regard, the sulfide-based solid electrolyte material may be prepared by treating raw starting materials (*e*.*g*., Li₂S, P₂S₅, and/or the like) of the sulfide-based solid electrolyte material by a melt quenching method, a mechanical milling method, and/or the like. In one or more embodiments, a calcination process may be performed, following the above treatment. The sulfide-based solid electrolyte may be amorphous or crystalline or may be in a mixed state thereof.

The polymer solid electrolyte may be, for example, an electrolyte containing a mixture of a lithium salt and a polymer or a polymer having an ionically conductive functional group. The polymer solid electrolyte may be, for example, a polymer electrolyte containing no liquid electrolyte. The polymer included in the polymer solid electrolyte may include, for example, polyethylene oxide (PEO), polyvinylidene fluoride (PVDF), polyvinylidene fluoride-co-hexafluoropropylene (PVDF-HFP), and/or a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethyleneoxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylene dioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), sulfonated poly[bis(benzimidazobenzisoquinolinones)] (SPBIBI), lithium 9,10-diphenylanthracene-2-sulfonate (DPASLi⁺), and/or any suitable combination thereof, but the present disclosure is not limited thereto, and any suitable polymer electrolyte generally available and/or generally utilized in the art may be utilized. Any suitable lithium salt generally available and/or generally utilized in the art may be utilized. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (wherein x and y are each 1 to 20), LiCl, Lil, and/or any suitable mixture thereof.

The gel electrolyte is, for example, a gel polymer electrolyte. In one or more embodiments, the gel polymer electrolyte may be an electrolyte including a liquid electrolyte and a polymer, or an electrolyte including an organic solvent and a polymer having an ionically conductive functional group. The liquid electrolyte may be, for example, an ionic liquid, a mixture of a lithium salt and an organic solvent, a mixture of an ionic liquid and an organic solvent, and/or any suitable mixture of a lithium salt, an ionic liquid, and an organic solvent. The polymer may be (*e*.*g*., may be selected from among) polymers utilized for solid polymer electrolytes. The organic solvent may be (*e*.*g*., may be selected from among) organic solvents utilized for liquid electrolytes. The lithium salt may be of (e.g., selected from among) lithium salts utilized for solid polymer electrolytes. The ionic liquid refers to a salt that is in a liquid state at room temperature or a molten salt at room temperature, which has a melting point below room temperature and consists only of ions. The ionic liquid may include, for example, one or more of (*e*.*g*., one or more selected from among) compounds including: a) at least one cation of (*e*.*g*., selected from among) ammonium-based cation, pyrrolidinium-based cation, pyridinium-based cation, pyrimidine-based cation, imidazolium-based cation, piperidinium-based cation, pyrazolium-based cation, oxazolium-based cation, pyridazinium-based cation, phosphonium-based cation, sulfonium-based cation, triazolium-based cation, and/or any suitable mixture thereof; and b) one or more anion of (e.g., selected from among) BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br, I-, BF4-, SO₄²⁻, CF₃SO₃⁻, (FSO₂)₂N⁻, (C₂F₅SO₂)₂N⁻, (C₂F₅SO₂)(CF₃SO₂)N⁻, and/or (CF₃SO₂)₂N⁻. The gel polymer electrolyte may be formed by impregnating the polymer solid electrolyte with an electrolyte solution in a lithium battery. The gel electrolyte may further include inorganic particles.

### Method of manufacturing electrode

A method of manufacturing an electrode 100 according to one or more embodiments may be provided. The method of manufacturing the electrode 100 may include: preparing an electrode current collector 110 containing a porous structure; preparing a first electrode structure by disposing an electrode active material layer 120 on a side (*e*.*g*., both sides (*e*.*g*., opposite sides)) of the electrode current collector 110; preparing two or more second electrode structures by rolling the first electrode structure; and manufacturing the electrode 100 by stacking the two or more second electrode structures and then rolling.

In one or more embodiments, the electrode active material layer 120 may be a dry electrode film.

In one or more embodiments, in the manufacturing of the electrode 100 by stacking the two or more second electrode structures, and then rolling, the electrode 100 may be manufactured by disposing or arranging the second electrode current collector between the two or more second electrode structures and then rolling.

The dry electrode film may be prepared by mixing a dry electrode active material, a dry conductive material, and a dry binder in a dry manner to prepare a dry mixture; and preparing of a dry electrode film by molding the dry mixture.

First, the dry electrode active material, the dry conductive material, and the dry binder may be mixed in a dry manner to prepare the dry mixture. For example, the dry mixture may be prepared by mixing the dry electrode active material, the dry conductive material, and the dry binder.

Dry mixing refers to mixing in a state in which no processing solvent is included. The processing solvent may be, for example, a solvent utilized for the preparation of an electrode slurry. The processing solvent may be, for example, water, N-Methylpyrrolidone or 1-methyl-2-pyrrolidinone (NMP), and/or the like, but the present disclosure is not limited thereto as long as it is a processing solvent utilized in the preparation of the electrode slurry. The dry mixing may be performed utilizing an agitator, for example, in temperatures of about 15 °C to about 65 °C at a rotation speed of about 10 rpm to about 10000 rpm. The dry mixing may be performed by utilizing a stirrer for about 1 minute to about 200 minutes.

The dry mixing may be performed, for example, more than one time. First, the dry electrode active material, the dry conductive material, and the dry binder may be subjected to primary dry mixing to prepare a first dry mixture. The primary dry mixing may be performed, for example, at a temperature of about 25 °C to about 65 °C, at a rotation speed of about 10 rpm to about 2000 rpm, for 15 minutes or less. Subsequently, the first dry mixture may be further subjected to secondary dry mixing to prepare a second mixture. The secondary dry mixing may be performed, for example, at a temperature of about 25 °C to about 65 °C at a rotation speed of about 3000 rpm to about 9000 rpm for about 10 minutes to about 60 minutes. A dry mixture including a fibrillized dry binder may be obtained by the secondary dry mixing.

The stirrer may be, for example, a kneader. The stirrer may include, for example, a chamber, one or more rotation axes arranged and rotating inside the chamber, and a blade rotatably coupled to the rotation axes and arranged in a longitudinal direction of the rotation axes. The blade may be, for example, one or more of (*e*.*g*., one or more selected from among) a ribbon blade, a sigma blade, a jet (Z) blade, a dispersion blade, and/or a screw blade. A mixture in a dough-like form may be prepared by effectively mixing the electrode active material, the dry conductive material, and the dry binder without a solvent because the blade is included.

Examples of the dry binders may include vinylidene fluoride/hexafluoropropylene copolymer, polyvinylidene fluoride, polyacrylonitrile, polymethyl methacrylate, polytetrafluoroethylene (PTFE), a mixture of the above-described polymers, and a styrene-butadiene rubber-based polymer. The dry binder may be (*e*.*g*., may be selected from among) the dry binders utilized for the dry electrode film.

The dry conductive material may be carbon black, graphite fine particles, natural graphite, artificial graphite, acetylene black, Ketjen black, carbon fibers, carbon nanotubes, metal powder, metal fiber, or metal tubes of such as copper, nickel, aluminium, silver, and/or the like, a conductive polymer such as a polyphenylene derivative, and/or the like, but the present disclosure is not limited thereto, and any suitable conductive material generally available and/or generally utilized in the art may be utilized. The conductive material is, for example, a carbon-based conductive material. The dry conductive material may be (*e*.*g*., may be selected from among) the dry conductive materials utilized in the above-described dry electrode film.

According to one or more embodiments, a plasticizer or pore-forming agent may be further added to the dry mixture to form (or provide) pores inside an electrode plate.

Amounts of the dry electrode active material, the dry binder, and the dry conductive material, each utilized in the dry electrode film, may be a level that is generally utilized in a lithium battery.

The dry positive electrode film may utilize a dry positive electrode active material as a dry active material. For the dry positive electrode active material, the descriptions of the above-described dry electrode film may be referred to.

The dry negative electrode film may utilize a dry negative electrode active material as a dry electrode active material. For the dry negative electrode active material, the descriptions of the above-described dry electrode film may be referred to.

Subsequently, the dry mixture may be molded to prepare a dry electrode film.

The prepared dry mixture may be introduced into an extrusion device and extruded in the form of a sheet. The pressure during the extrusion may be, for example, about 4 MPa to about 100 MPa.

According to one or more embodiments, the rolling may be carried out through a roll-press, flat press, and/or the like, but the present disclosure is not necessarily limited thereto. For example, the pressure during the rolling may be about 1.0 ton/cm² to about 10.0 tons/cm². For example, the temperature during the rolling may be about 25 °C to about 200 °C.

### Method of manufacturing lithium battery

The lithium battery is manufactured by, for example, the following example method, but the present disclosure is not necessarily limited to the following method and the method may vary according to desired or required conditions.

First, one or both of the positive electrode and/or the negative electrode may be manufactured according to the above-described method of manufacturing the dry electrode. In one or more embodiments, if one electrode of the positive electrode and the negative electrode is manufactured by the above-described method of manufacturing an electrode, another electrode may be manufactured by a wet manufacturing method. For example, the other electrode may be manufactured by preparing an electrode slurry including an electrode active material, a conductive material, a binder, and a solvent, and applying the prepared electrode slurry onto the electrode current collector and then drying. A conductive material and a binder included in an electrode manufactured in a wet manner may be of (*e*.*g*., selected from among) the conductive material and/or the binder utilized in the manufacture of the above-described dry electrode.

Next, a separator to be inserted between the positive electrode and the negative electrode may be prepared.

The separator may be any suitable separator generally available and/or generally utilized in a lithium battery. As the separator, for example, a separator that has relatively low resistance to ion movement of an electrolyte and excellent or suitable electrolyte solution moisture retention ability may be utilized. The separator may be (*e*.*g*., may be selected from among), for example, glass fiber, polyester, Teflon, polyethylene, polypropylene, polytetrafluoroethylene (PTFE), and/or any suitable combination thereof, and is in the form of a non-woven or woven fabric. A windable separator such as polyethylene, polypropylene, and/or the like may be utilized in a lithium-ion battery, and a separator having excellent or suitable organic electrolyte solution impregnation ability may be utilized in a lithium-ion polymer battery.

The separator may be manufactured by the following example method, but the present disclosure is not necessarily limited to the following method and may be adjusted according to desired or required conditions.

First, a separator composition may be prepared by mixing a polymer resin, a filler, and a solvent. The separator composition may be directly applied and dried onto a top surface of the electrode to form (or provide) a separator. In one or more embodiments, the separator composition may be cast and dried onto a support, and then a separator film peeled off from the support may be stacked in the top surface of the electrode to form (or provide) a separator.

A polymer utilized in the preparation of the separator is not limited, and any suitable polymer generally available and/or generally utilized in a binder of an electrode plate may be utilized. For example, a vinylidene fluoride/hexafluoropropylene copolymer, polyvinylidene fluoride (PVDF), polyacrylonitrile, polymethyl methacrylate, and/or any suitable mixture thereof may be utilized.

Next, the electrolyte may be prepared. For the electrolyte, the descriptions of the above-described lithium battery may be referred to.

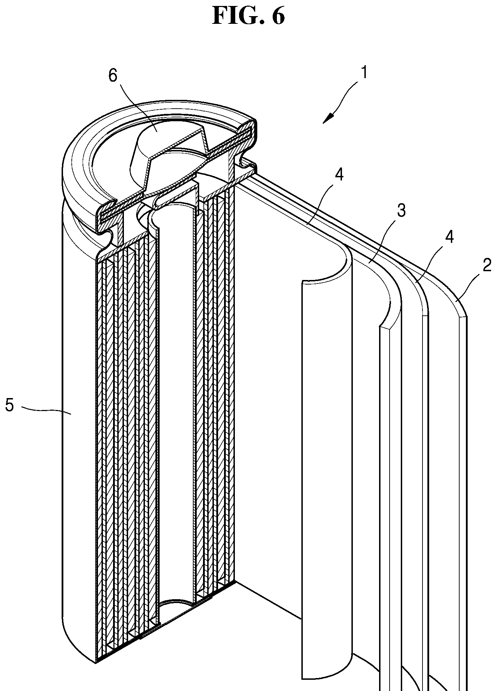

Referring to FIG. 6, a lithium battery 1 according to one or more embodiments may include a positive electrode 3, a negative electrode 2, and a separator 4. The positive electrode 3, the negative electrode 2, and the separator 4 may be wound or folded to form (or provide) a battery structure. The formed battery structure may be accommodated in a battery case 5. An organic electrolyte solution may be injected into the battery case 5 and sealed with a cap assembly 6 to complete the lithium battery 1. The battery case 5 may have a cylindrical shape, but the present disclosure is not necessarily limited thereto and may have a polygonal shape, a thin-film shape, and/or the like.

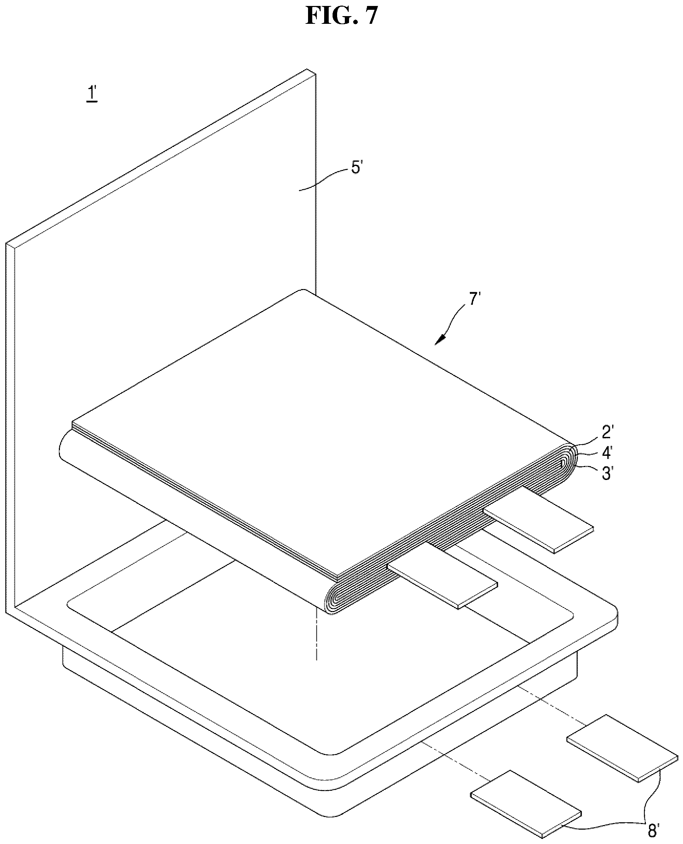

Referring to FIG. 7, the lithium battery 1' according to one or more embodiments may include a positive electrode 3', a negative electrode 2', and a separator 4'. The separator 4' may be arranged between the positive electrode 3' and the negative electrode 2', and the positive electrode 3', the negative electrode 2', and the separator 4' may be wound or folded to form (or provide) a battery structure 7'. The formed battery structure 7' may be accommodated in a battery case 5'. An electrode tab 8', acting as an electrical path for inducing an electric current generated in the battery structure 7' to the outside, may be included. An organic liquid electrolyte may be injected into the battery case 5' and sealed to complete the lithium battery 1'. The battery case 5' may have a polygonal shape, but the present disclosure is not necessarily limited thereto, and for example, may also have a cylindrical shape, a thin-film shape, and/or the like.

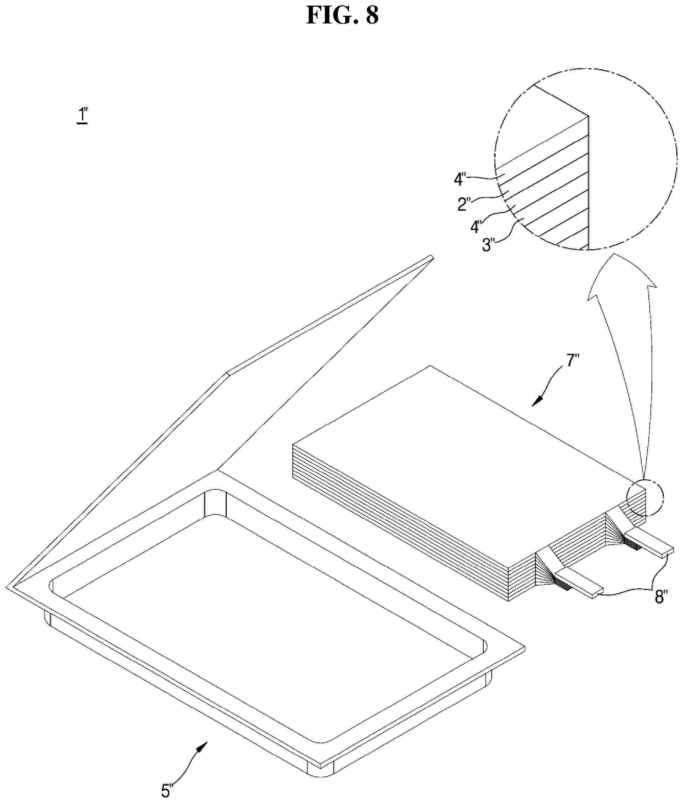

Referring to FIG. 8, the lithium battery 1" according to one or more embodiments includes a positive electrode 3", a negative electrode 2", and a separator 4". The separator 4" is arranged between the positive electrode 3" and the negative electrode 2" to form (or provide) a battery structure. The battery structure 7" is stacked in a bi-cell structure, and then accommodated in the battery case 5". An electrode tab 8", acting as an electrical path for inducing an electric current generated in the battery structure 7" to the outside, may be included. An organic liquid electrolyte may be injected into the battery case 5" and sealed to complete the lithium battery 1". The battery case 5" may have a polygonal shape but the present disclosure is not necessarily limited thereto, and for example, may also have a cylindrical shape, a thin-film shape, and/or the like.

A pouch-type or kind lithium battery may correspond to lithium batteries in FIG. 6 to FIG. 8, each of which a pouch-type or kind battery case is utilized as a battery case. The pouch-type or kind lithium battery may include at least one battery structure. The separator may be arranged between the positive electrode and the negative electrode to form (or provide) a battery structure. The battery structure may be stacked in a bi-cell structure, impregnated with an organic electrolyte solution, and then accommodated and sealed in a pouch to complete the pouch-type or kind lithium battery. For example, the positive electrode, the negative electrode, and the separator, which are described above, may be simply stacked to thereby be accommodated in a pouch in the form of an electrode assembly, or wound or folded into a jelly-roll type or kind electrode assembly, and then accommodated in a pouch. Subsequently, an organic electrolyte solution may be injected into the pouch and sealed to complete the lithium battery.

The lithium battery may have excellent or suitable lifespan characteristics and relatively high-rate characteristics, which makes it suitable for utilization in, for example, electric vehicles (EVs). For example, the lithium battery may be utilized in hybrid vehicles, such as plug-in hybrid electric vehicles (PHEVs) and/or the like. Also, the lithium battery may be utilized in any field that requires a large amount of energy storage. For example, the lithium battery may be utilized in an electric bicycle, a power tool, and/or the like.

The lithium batteries may be stacked in plurality to form (or provide) a battery module, and a plurality of battery modules may form (or provide) a battery pack. Such a battery pack may be utilized in all types (kinds) of devices that require relatively high capacity and relatively high output. For example, the battery pack may be utilized in laptop computers, smartphones, electric vehicles, and/or the like. The battery module may include, for example, a plurality of batteries and a frame holding the batteries. The battery pack may include, for example, a plurality of battery modules and a bus bar for connecting the same. The battery module and/or the battery pack may further include a cooling device. The plurality of battery packs may be adjusted by a battery management system. The battery management system may include a battery pack and a battery control device connected to the battery pack.

The present disclosure is described in more detail with reference to Examples and Comparative Examples below. However, Examples are merely for the purpose of illustrating embodiments of the present disclosure, and the scope of the present disclosure is not limited thereto.

### Manufacture of lithium battery(half-cell)

### Example 1: Electrode having the same structure as in FIG. 1

### Manufacture of positive electrode film and positive electrode

LiNi_{0.91}Co_{0.005}Al_{0.04}O₂ (hereinafter, referred to as NCA91) having an average particle diameter (D50) of 14 µm, a dry carbon conductive material, and polytetrafluoroethylene (PTFE) as a dry binder were introduced into a blade mixer at a weight ratio of 96:2:2, and then subjected to primary dry mixing at 25 °C at a speed of 1200 rpm for 10 minutes to prepare a first dry mixture in which the dry positive electrode active material, the dry conductive material, and the dry binder were uniformly (substantially uniformly) mixed. As the dry carbon conductive material, a mixture of carbon nanotubes (CNT) and Ketjen black (ECP) at a weight ratio of 7:3 was utilized.

Subsequently, to allow fibrillization of the dry binder to proceed, the first dry mixture was subjected to an additional secondary mixing at 25 °C with a blade mixer at a speed of 4000 rpm for 25 minutes to prepare a second dry mixture.

No solvent was utilized in the preparation of the first dry mixture and the second dry mixture.

The prepared second dry mixture was put into an extruder and extruded to prepare a dry positive electrode film in the form of a sheet of self-standing film. The pressure during the extrusion was about 60 MPa.

The prepared positive electrode film was rolled to prepare a rolled dry electrode self-standing film. The pressure during the rolling was about 3.5 tons/cm². The thickness of the dry positive electrode film was about 200 µm.

A thin aluminium film which has a thickness of 25 µm and includes a mesh structure was prepared. The aluminium thin film had a porosity of 50%. The dry positive electrode film was arranged on both sides (*e*.*g*., opposite sides) of the mesh structure of the thin aluminum film and the resulting was rolled at 60 °C with the pressure of 3.5 tons/cm² to prepare the second positive electrode structure. Two of the second positive electrode structures were manufactured in substantially the same manner.

Thereafter, two of the second positive electrode structures were stacked and then rolled at 60 °C with a pressure of 3.5 tons/cm² to prepare a positive electrode.

### Manufacture of coin cells

A coin cell was manufactured by utilizing the positive electrode prepared above, a lithium metal as a counter electrode, and a solution, as an electrolyte, in which a PTFE separator and 1.3 M LiPF₆ were dissolved in ethylene carbonate (EC) + ethyl methyl carbonate (EMC) + dimethyl carbonate (DMC) (3:4:3 volume ratio).

### Example 2: Electrode having the same structure as in FIG. 2

The positive electrode was manufactured in substantially the same manner as the positive electrode according to Example 1 except that a thin aluminium film having a thickness of 25 µm was arranged between the second positive electrode structures in the stacking of two of the second positive electrode structures in Example 1. Thereafter, the coin cell was manufactured in substantially the same manner as in Example 1.

### Comparative Example 1: Use metal substrate including foam region

LiNi_{0.91}Co_{0.05}Al_{0.04}O₂ (hereinafter, referred to as NCA91) having an average particle diameter (D50) of 14 µm, a dry carbon conductive material, and polytetrafluoroethylene (PTFE) as a dry binder were introduced into a blade mixer at a weight ratio of 96:2:2, and then subjected to primary dry mixing at 25 °C at a speed of 1200 rpm for 10 minutes to prepare a first dry mixture in which the dry positive electrode active material, the dry conductive material, and the dry binder were uniformly (substantially uniformly) mixed. As the dry carbon conductive material, a mixture of carbon nanotubes (CNT) and Ketjen black (ECP) at a weight ratio of 7:3 was utilized.

Subsequently, to allow fibrillization of the dry binder to proceed, the first dry mixture was subjected to additional secondary mixing at 25 °C with a blade mixer at a speed of 4000 rpm for 25 minutes to prepare a second dry mixture.

No solvent was utilized in the preparation of the first dry mixture and the second dry mixture.

The prepared second dry mixture was injected into an extruder and extruded to prepare a dry positive electrode film in the form of a sheet of self-standing film. The pressure during the extrusion was about 60 MPa.

The prepared positive electrode film was rolled to prepare a rolled dry electrode self-standing film. The pressure during the rolling was about 3.5 tons/cm². The thickness of the dry positive electrode film was about 200 µm.

A thin aluminium film, which has a thickness of 25 µm and a mesh region including a plurality of penetration regions, was prepared. A ratio of a total area of the penetration regions to a whole area of the thin aluminium film was 50%. The dry positive electrode film was arranged on both sides (*e*.*g*., opposite sides) of the mesh region of the thin aluminium film and the obtained was rolled at 60 °C with the pressure of 3.5 tons/cm² to prepare the positive electrode.

### Manufacture of coin cells

A coin cell was manufactured by utilizing the positive electrode prepared above, a lithium metal as a counter electrode, and a solution in which a PTFE separator and 1.3 M LiPF₆ were dissolved in ethylene carbonate (EC) + ethyl methyl carbonate (EMC) + dimethyl carbonate (DMC) (volume ratio of 3:4:3) as an electrolyte.

### Evaluation Example 1: Evaluation of Electrode Resistance

The mixture resistance for each of the positive electrodes manufactured according to Examples 1 and 2 and Comparative Example 1 was measured utilizing a Hioki electrode resistance meter.

The dry positive electrodes manufactured according to Examples 1 and 2, and Comparative Example 1 were each prepared (36 pyro-rolled electrode plates), and current/voltage (100 µA, about 0.2 V to about 5.0 V) were applied to the prepared dry positive electrodes. Potential by distance was measured for each of the dry positive electrodes utilizing a measuring instrument probe, and the measured value was converted to resistance, thereby measuring the mixture/interface (electrode plate/substrate) resistance values. The mixture resistance values were measured 5 times or more, and then an average value of the data after removing minimum and maximum values was calculated as a mixture resistance. The mixture resistances for the positive electrodes manufactured according to Examples 1 and 2, and Comparative Example 1 were measured, and the measurement results were listed in Table 1.

### Evaluation Example 2: Rapid charging and discharging characteristics evaluation at room temperature (25 °C)

The lithium batteries manufactured according to Examples 1 and 2 and Comparative Example 1 were charged at 25 °C with a constant current at a current of 1 C (*e*.*g*., C rate) until the voltage reached 4.3 V (vs. Li), and then the cut-off was performed at a current of 0.05 C while maintaining the voltage at 4.3 V in a constant voltage mode. Subsequently, the lithium batteries were discharged with a constant current of 0.1 C until the voltage reached 2.8 V (vs. Li) during the discharging (formation cycle).

The lithium batteries after the formation cycle were each charged at a relatively high rate of 1 C rate at 25 °C to 80% of state of charge (SOC). Subsequently, the lithium batteries were discharged with a constant current of 0.5 C rate until the voltage reached 2.8 V (vs. Li) during the discharging. In addition, the maximum temperature of the lithium battery was measured by placing a temperature sensor on the top of the lithium battery.

The maximum temperatures of the lithium batteries and the voltage at 80% of SOC during charging and discharging, are listed in Table 1.

**Table 1**

| | Mixture resistance [Ωcm] | Cell max temperature | SOC 80%, Voltage[V] |
|---|---|---|---|
| Example 1, Same structure as in FIG. 1 | 5.06 | 27.0 | 3.384 |
| Example 2, Same structure as in FIG. 2 | 4.45 | 26.3 | 3.378 |
| Comparative Example 1, Same structure as in FIG. 3 | 6.12 | 27.8 | 3.904 |

As shown in Table 1, the electrodes according to Examples 1 and 2, which include two or more electrode current collectors containing a porous structure each have decreased internal resistance of the electrodes, and overvoltage and cell temperature rise during rapid charging may be effectively suppressed or reduced, compared to the electrode of Comparative Example 1, which includes one electrode current collector containing a porous structure.

According to one or more embodiments, the electrode includes two or more electrode current collectors containing the porous structure, and thus internal resistance of the electrode may decrease.

According to one or more embodiments, the lithium battery including the electrode may have decreased internal resistance, and thus overvoltage and temperature rise of the battery during rapid charging may be suppressed or reduced.

As used herein, the terms "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Further, the use of "may" when describing embodiments of the present disclosure refers to "one or more embodiments of the present disclosure."

The portable device, vehicle, and/or the battery, *e*.*g*., a battery controller, and/or any other relevant devices or components according to embodiments of the present disclosure described herein may be implemented utilizing any suitable hardware, firmware (*e*.*g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. Although the embodiments of the present disclosure have been described, it is understood that the present disclosure should not be limited to these embodiments, but one or more suitable changes and modifications can be made by one ordinary skilled in the art within the scope of the present disclosure as defined by the following claims and equivalents thereof.

## Claims

1. An electrode comprising:
an electrode active material layer; and
two or more electrode current collectors arranged along a thickness direction within the electrode active material layer,
wherein the two or more electrode current collectors comprise:
an upper electrode current collector adjacent a top surface of the electrode active material layer; and
a lower electrode current collector adjacent a bottom surface of the electrode active material layer,
wherein the electrode active material layer comprises:
an internal electrode active material layer between the upper electrode current collector and the lower electrode current collector; and
an external electrode active material layer outside of the upper electrode current collector and the lower electrode current collector, and
wherein the two or more electrode current collectors comprise a porous structure.

2. The electrode as claimed in claim 1, wherein a thickness of the internal electrode active material layer is greater than a thickness of the external electrode active material layer.

3. The electrode as claimed in claim 1 or claim 2, wherein:
the internal electrode active material layer has a thickness of about 10 µm to about 190 µm,
the external electrode active material layer has a thickness of about 10 µm to about 190 µm, and
the electrode active material layer has a total thickness of about 20 µm to about 380 µm.

4. The electrode as claimed in any one of claims 1 to 3,
wherein the electrode active material layer is a dry electrode film, and
the dry electrode film is a self-standing film and is free of a residual processing solvent.

5. The electrode as claimed in claim 4,
wherein the dry electrode film comprises a dry electrode active material and a dry binder, and
the dry binder comprises a fibrillized binder and a fluorine-based binder.

6. The electrode as claimed in claim 5, wherein:
a glass transition temperature (T_{g}) of the dry binder is about 15 °C to about 150 °C; and
an amount of the dry binder is about 0.1 wt% to about 5 wt%, with respect to a total weight of the dry electrode film.

7. The electrode as claimed in any one of claims 4 to 6,
wherein the dry electrode film further comprises a dry conductive material,
the dry conductive material comprises a carbon-based conductive material,
the carbon-based conductive material comprises a fibrous carbon-based material having an aspect ratio of 10 or more, a particulate carbon-based material having an aspect ratio of 5 or less, or a combination thereof, and
an amount of the dry conductive material is about 0.1 wt% to about 5 wt%, with respect to a total weight of the dry electrode film.

8. The electrode as claimed in any one of claims 1 to 7, wherein:
the internal electrode active material layer comprises a first dry electrode film containing a first electrode active material and a first dry binder; and
the external electrode active material layer comprises a second dry electrode film containing a second dry electrode active material and a second dry binder.

9. The electrode as claimed in claim 8, wherein:
(i) the first dry electrode active material is the same as the second dry active material; or
(ii) the first dry electrode active material is different from the second dry active material.

10. The electrode as claimed in any one of claims 1 to 9, wherein:
(i) the porous structure comprises a mesh structure or a foam structure; and/or
(ii) a porosity of the porous structure is about 5 vol% to about 95 vol%; and/or
(iii) a volume per unit volume of pores contained in the porous structure is about 10 vol% to about 90 vol%.

11. The electrode as claimed in any one of claims 1 to 10, further comprising a second electrode current collector between the upper electrode current collector and the lower electrode current collector, optionally wherein the second electrode current collector is free of a porous structure.

12. The electrode as claimed in claim 11, wherein
a thickness of a region between the second electrode current collector and the upper electrode current collector is greater than the thickness of the external electrode active material layer above the upper electrode current collector; and/or
a thickness of a region between the second electrode current collector and the lower electrode current collector is greater than the thickness of the external electrode active material layer below the lower electrode current collector.

13. The electrode as claimed in any one of claims 1 to 12, wherein:
the two or more electrode current collectors each include a base film and a metal layer on a side of the base film;
the base film comprises a polymer, and the polymer contains polyethylene terephthalate (PET), polyethylene (PE), polypropylene (PP), polybutylene terephthalate (PBT), polyimide (PI), or a combination thereof; and
the metal layer comprises indium (In), copper (Cu), magnesium (Mg), titanium (Ti), iron (Fe), cobalt (Co), nickel (Ni), zinc (Zn), aluminium (Al), germanium (Ge), lithium (Li), or an alloy thereof.

14. The electrode as claimed in any one of claims 1 to 13, further comprising an interlayer between the electrode active material layer and one of the two or more the electrode current collectors,
wherein the interlayer comprises a carbon-based conductive material.

15. A lithium battery comprising:
a positive electrode;
a negative electrode; and
an electrolyte between the positive electrode and the negative electrode,
wherein at least one of the positive electrode or the negative electrode is the electrode as claimed in any one of claims 1 to 14, optionally wherein the electrolyte comprises a liquid electrolyte, a solid electrolyte, a gel electrolyte, or a combination thereof.
